**Europäisches Patentamt**

**European Patent Office**

**Office européen des brevets**

(19)

(11) Veröffentlichungsnummer: **0 163 928**
**B1**

(12) ## EUROPÄISCHE PATENTSCHRIFT

(45) Veröffentlichungstag der Patentschrift:
**18.10.89**

(21) Anmeldenummer: **85105204.3**

(22) Anmeldetag: **29.04.85**

(51) Int. Cl.⁴: **H 02 K 15/10**

(54) Verfahren und Vorrichtung zur Erzeugung von in die Nuten von Statoren elektrischer Maschinen einsetzbaren Deckstreifen.

(30) Priorität: **08.06.84 DE 3421428**

(43) Veröffentlichungstag der Anmeldung:
**11.12.85 Patentblatt 85/50**

(45) Bekanntmachung des Hinweises auf die Patenterteilung:
**18.10.89 Patentblatt 89/42**

(84) Benannte Vertragsstaaten:
**DE FR GB IT**

(56) Entgegenhaltungen:
**SOVIET INVENTIONS ILLUSTRATED, Sektion Mechanik, Woche 84/20, 27. Juni 1984, Zusammenfassungsnr. 84-125864/20, Derwent Publications Ltd., London, GB; & SU - A - 1 035 736 (KABIROV R F) 15.08.83**

(73) Patentinhaber: **STATOMAT-GLOBE Machinenfabrik GmbH, An der Rosenhelle 4, D-6369 Niederdorfelden (DE)**

(72) Erfinder: **Dröll, Hans, Nordring 75, D-6000 Frankfurt 60 (DE)**
Erfinder: **Fessler, Dieter, Kiefernweg 1, D-6380 Bad Homburg 6 (DE)**

(74) Vertreter: **Jochem, Bernd, Dipl.-Wirtsch.-Ing., Patentanwälte Beyer & Jochem Staufenstrasse 36, D-6000 Frankfurt/Main (DE)**

## Beschreibung

Die Erfindung betrifft ein Verfahren zur Erzeugung von in die Nuten von Statoren elektrischer Maschinen einsetzbaren Deckstreifen aus in Vorratsrollen bereitgestelltem streifenförmigen Ausgangsmaterial, welches durch an einem Führungskanal angeordnete Vorschuborgane einem Schneidwerkzeug zugeführt wird, sowie eine zur Durchführung dieses Verfahrens geeignete Vorrichtung.

Eine solche Vorrichtung ist in der europäischen Patentanmeldung EP-A 0 051 858 beschrieben. Die Vorratsrollen können nur eine begrenzte Länge von etwa 400 bis 500 m Deckstreifenmaterial aufnehmen. Moderne Fertigungsanlagen brauchen diesen Vorrat in etwa 1 bis 1,5 Stunden auf. Dann musste bisher die Anlage für ungefähr fünf Minuten abgeschaltet werden, um das Ende der aufgebrauchten Vorratsrolle aus dem Führungskanal zu ziehen und den Anfang der nächsten Vorratsrolle in diesen einzufädeln. Die Stillstandszeit, die etwa 6 bis 8% der gesamten Fertigungszeit ausmacht, fällt besonders stark ins Gewicht bei verketteten Anlagen, in denen z.B. mehrere Wickelmaschinen, welche die Drahtwicklungen der Statoren erzeugen, mit einer Einziehvorrichtung verkettet sind, welche die Drahtwicklungen in die Statoren einzieht und gleichzeitig auch die Deckstreifen in die Statornuten einschiebt.

Der Erfindung liegt die Aufgabe zugrunde, die durch den Wechsel der Vorratsrollen verursachte Stillstandszeit zu verkürzen, und zur Lösung dieser Aufgabe wird vorgeschlagen, dass die Materialstreifen mehrerer Vorratsrollen jeweils in einen von mehreren Einlaufabschnitten des Führungskanals eingeführt werden und beim Übergang von einer zur nächsten Vorratsrolle deren Materialstreifen durch gesteuerte Bewegung des diesen haltenden Einlaufabschnittes relativ zum anschliessenden Teil des Führungskanals positioniert wird.

Das erfindungsgemässe Arbeitsverfahren bietet den Vorteil, dass das Einfädeln des Anfangs der nächstfolgenden Vorratsspule in einen Einlaufabschnitt des Führungskanals bereits stattfinden kann, während noch Deckstreifenmaterial von einer anderen Vorratsspule abgezogen wird. Geht diese dann zu Ende, können die zum Umstellen auf die nächste Vorratsrolle erforderlichen Vorgänge automatisch maschinell, d.h. sehr schnell ausgeführt werden.

In bevorzugter Ausführung der Erfindung wird vor der Ausrichtung des in einem Einlaufabschnitt gehaltenen anfangs eines Materialstreifens in Flucht mit dem anschliessenden Abschnitt des Führungskanals das darin liegende Ende der vorhergehenden Vorratsrolle rückwärts herausgezogen. Dieses Verfahren lässt sich sehr einfach und problemlos durchführen, da die Materialstreifen sowohl der aufgebrauchten wie auch der frischen Vorratsrolle in den jeweiligen Einlaufabschnitten des Führungskanals von Transportorganen erfasst und zurückgezogen bzw. vorgeschoben werden können.

Soll auch noch der mit dem Zurückziehen des Endes der verbrauchten Vorratsspule verbundene geringe Verlust an Deckstreifenmaterial vermieden werden, besteht alternativ zu der zuletzt genannten Verfahrensvariante die Möglichkeit, dass vor der Ausrichtung des in einem Einlaufabschnitt gehaltenen Anfangs eines Materialstreifens in Flucht mit dem anschliessenden Abschnitt des Führungskanals das darin liegende Ende der vorhergehenden Vorratsspule abgeschnitten und mit dem Anfang der nächsten Vorratsrolle zusammengeschweisst wird. In solchen Fällen, wo sich Schwierigkeiten daraus ergeben könnten, dass bei diesem Verfahren die Schweissstelle an irgendeine nicht vorherbestimmbare Stelle eines Deckstreifens gelangt, kann in weiterer Ausgestaltung des erfindungsgemässen Verfahrens vorgesehen sein, dass das Ende der vorhergehenden Vorratsspule um eine solche Länge teilweise rückwärts aus dem Führungskanal herausgezogen und dann abgeschnitten und mit dem Anfang der nächsten Vorratsspule zusammengeschweisst wird, dass beim anschliessenden Abtrennen der Deckstreifen die Schweissstelle an ein Ende eines Deckstreifens gelangt.

Die erfindungsgemässe Vorrichtung zur Durchführung des genannten Verfahrens geht von den bekannten Vorrichtungen mit einem Führungskanal zwischen einer Vorratsrolle Deckstreifenmaterial und einem die Deckstreifen davon abtrennenden Schneidwerkzeug aus und ist dadurch gekennzeichnet, dass der Führungskanal mehrere Einlaufabschnitte hat, welche durch Relativbewegung einzeln in Flucht vor seinen anschliessenden Teil positionierbar sind und wenigstens an dem jeweils in dieser Anschlussstellung positionierten Einlaufabschnitt reversierbare Vorschuborgane angeordnet sind. Beim Wechsel der Vorratsrollen können die reversierbaren Vorschuborgane das Ende der verbrauchten Vorratsrolle ganz oder teilweise zurückziehen, und die verschiedenen Einlaufabschnitte können durch einen gesteuerten maschinellen Verstellantrieb und/oder Anschläge in kürzester Zeit die Position mit Anschluss an den übrigen Teil des Führungskanals wechseln.

Es kommt für die angestrebte Funktion nur auf die Relativbewegung zwischen den Einlaufabschnitten einerseits und dem anschliessenden Teil des Führungskanals andererseits an. Vorzugsweise wird man jedoch letzteren feststehend ausbilden und der Einfachheit halber sämtliche Einlaufabschnitte – normalerweise werden 2 bis 4 genügen, es könnten aber auch mehr sein – als eine gemeinsam bewegbare Einheit konstruieren, wobei die Einlaufabschnitte durch gemeinsame Parallelverschiebung einzeln an den übrigen Teil des Führungskanals anschliessbar sind. Mit dieser Einheit können auch Halterungen zur drehbaren Aufnahme der Vorratsrollen gemeinsam verfahren, so dass die gegenseitige räumliche Ausrichtung zwischen den Vorratsrollen und ihren zugeordneten Einlaufabschnitten in allen Stellungen der verfahrbaren Einheit unverändert bleibt.

In weiterer bevorzugter Ausgestaltung der Erfindung sind an jedem Einlaufabschnitt des Führungskanals Transportrollen, die in der Anschlussstellung in beiden Drehrichtungen antreibbar sind, sowie Messer angebracht, welche zum sauberen, exakten Abschneiden des äusseren vorderen Endes einer frischen Vorratsspule dienen und nach dem Schnitt eine exakte Position des vorderen Materialendes ergeben. Auch zum Abschneiden des im Führungskanal liegenden hinteren Endes einer verbrauchten Vorratsspule vor dem Verschweissen mit dem vorderen Ende der nächstfolgenden Vorratsspule können diese Messer an den Einlaufabschnitten genutzt werden.

Die Vorratsrollen haben insbesondere am Anfang eine verhältnismässig grosse Massenträgheit. Es ist deshalb bekannt, am Führungskanal eine seitliche Öffnung anzubringen, durch die sich eine Vorratsschlaufe ausstülpen kann, und vor sowie hinter der Vorratsschlaufe steuerbare Vorschuborgane in Form von Transportrollen oder Transportklinken anzuordnen. Die Grösse der Vorratsschlaufe lässt sich z.B. mittels einer Lichtschranke überwachen. Die Vorschuborgane hinter der Vorratsschlaufe ziehen praktisch trägheitslos Deckstreifenmaterial aus der Vorratsschlaufe ab und führen es dem die Deckstreifen abtrennenden Schneidwerkzeug zu. Die Vorschuborgane vor der Vorschubschlaufe ziehen Deckstreifenmaterial von der Vorratsrolle ab und führen es der Vorratsschlaufe zu. Sie werden in Abhängigkeit von der Lichtschranke gesteuert. Um auch bei einer derartigen Vorrichtung die Erfindung anwenden zu können, ist in einer praktischen Ausführung vorgesehen, dass die Öffnung, durch welche die Vorratsschlaufe aus dem Führungskanal austritt, durch eine steuerbare Klappe, Schiebeplatte oder dergleichen verschliessbar ist und die kurz vor dem Schneidwerkzeug angeordneten Vorschuborgane reversierbar oder in eine das Deckstreifenmaterial freigebende Neutralstellung bewegbar sind.

Zur Verbindung des im Führungskanal liegenden hinteren Endes einer verbrauchten Vorratsrolle mit dem Anfang der nächstfolgenden Vorratsrolle kann in weiterer Ausgestaltung der Erfindung an dem sich an die Einlaufabschnitte anschliessenden Teil des Führungskanals eine Schweisseinrichtung angeordnet sein.

Die Erfindung wird nachstehend anhand der Zeichnung näher erläutert. Es zeigen:

Fig. 1 eine vereinfachte Seitenansicht einer Vorrichtung zur Erzeugung von Deckstreifen;
Fig. 2 eine Draufsicht auf die Vorrichtung nach Fig. 1;
Fig. 3 einen ergänzenden Abschnitt zur Erweiterung der Vorrichtung nach Fig. 1 um eine Schweisseinrichtung;
Fig. 4 einen Ausschnitt aus Fig. 1 in grösserem Massstab.

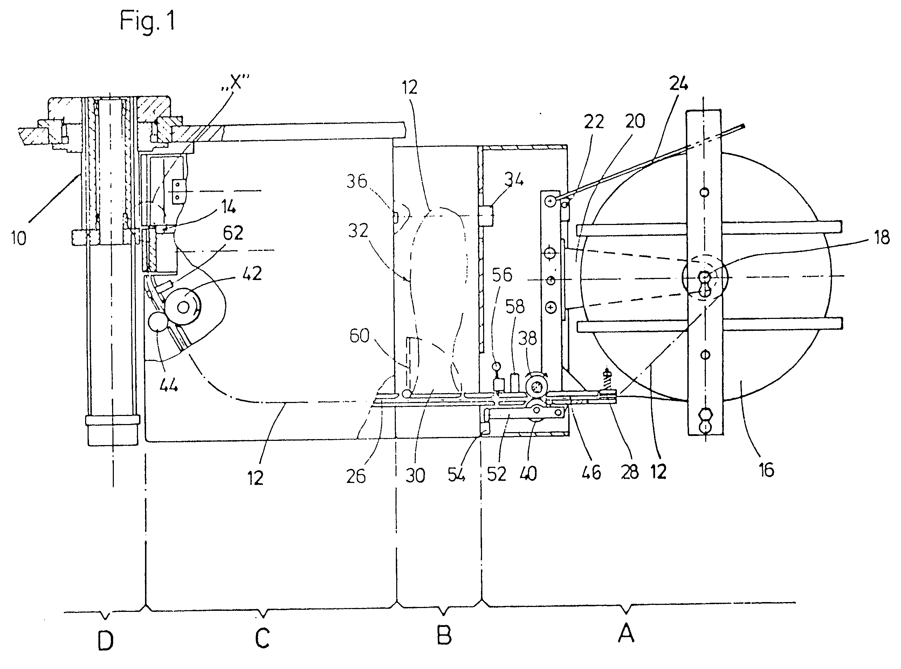

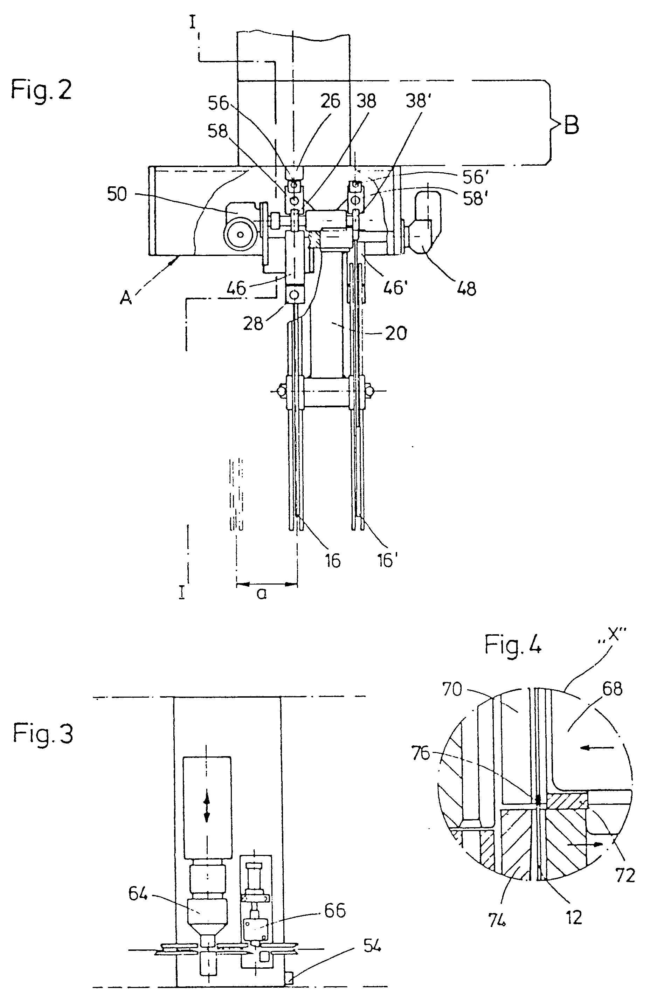

In Fig. 1 ist mit 10 der untere Teil eines Einziehwerkzeugs dargestellt, welchem Deckstreifen aus Isoliermaterial zugeführt werden, die beim Einziehen von Drahtwicklungen in Statoren elektrischer Maschinen in die Statornuten eingeschoben werden. Derartige Werkzeuge sind allgemein bekannt und z.B. in der veröffentlichten europäischen Patentanmeldung 81109516.5 (Veröffentlichungsschrift Nr. 0051858) und der DE-OS 2947371 beschrieben. Die Länge der Deckstreifen richtet sich nach der Höhe der Statorblechpakete, für die sie bestimmt sind, und ändert sich entsprechend, wenn auf derselben Einziehvorrichtung nacheinander Statorblechpakete mit unterschiedlichen Höhen bearbeitet werden. Zum Abtrennen der Deckstreifen von dem mit 12 bezeichneten streifenförmigen Ausgangsmaterial dient ein am Einziehwerkzeug 10 angeordnetes Schneidwerkzeug 14, welches in Fig. 4 in grösserem Massstab dargestellt ist.

Es sei an dieser Stelle angemerkt, dass es für die Erfindung nicht auf die Art und Lage des Werkzeugteils ankommt, an welchem das Schneidwerkzeug 14 angeordnet ist. In einer sehr gebräuchlichen Ausführungsform bildet der Werkzeugteil ein Deckstreifenmagazin, welches zunächst sämtliche gleichzeitig in die Statornuten einzuschiebenden Deckstreifen über den Umfang verteilt aufnimmt. Dieses Deckstreifenmagazin befindet sich gewöhnlich unter dem eigentlichen Einziehwerkzeug einer Wicklungseinziehstation. Daneben besteht aber z.B auch die Möglichkeit, die durch Abtrennen vom streifenförmigen Ausgangsmaterial erzeugten Deckstreifen bestimmter Länge einzeln in den oberen Teil eines Einziehwerkzeugs einzuschieben, was z.B. bei beweglichen Einziehwerkzeugoberteilen schon an der Wickelstation geschehen kann. Für die vorliegende Erfindung können diese Ausführungsvarianten der Einziehwerkzeuge ausser Betracht bleiben, weil sie sich nur mit der Behandlung des Deckstreifenmaterials zwischen der in Fig. 1 mit 16 bezeichneten Vorratsrolle und dem Schneidwerkzeug 14 zum Abtrennen der einzelnen Deckstreifen bestimmter Länge vom Ausgangsmaterial der Vorratsrolle 16 beschäftigt.

Die Vorratsrolle 16 lässt sich normalerweise auf eine sie tragende Achse 18 drehbar aufsetzen. Die Achse 18 gehört zu einer geeigneten Vorratsrollen-Halterung 20, welche ein leichtes Auswechseln der Vorratsrollen 16 gestattet. An der Halterung 20 ist eine Anzeige- oder Schalteinrichtung 22 mit einem Sensor angebracht, der durch einen auf der Vorratsrolle 16 aufliegenden, schwenkbar gelagerten Stab 24 betätigt wird. Es könnte auch die Neigung des Stabes 24 als Mass für die Länge des Vorrats dienen, der sich noch auf der Rolle 16 befindet. Wenn die Vorratsrolle 16 verbraucht ist und gegen eine neue Vorratsrolle ausgewechselt werden muss, erzeugt die Schalteinrichtung 22 ein Schaltsignal, welches bisher nur die gesamte Vorrichtung angehalten hat, nunmehr aber auch zum selbsttätigen Auswechseln der an das Schneidwerkzeug 14 angeschlossenen Vorratsrolle genutzt werden soll.

Das streifenförmige Material wird durch einen Führungskanal 26 zum Schneidwerkzeug 14 geleitet. Am Anfang des Führungskanals 26 befindet sich im Beispielsfall eine Filzbremse 28, deren Reibkraft einstellbar ist. Sie dient nicht nur der Vergleichmässigung des Streifenvorschubs, sondern auch der Reinigung des Materialstreifens.

Im weiteren Verlauf hat der Führungskanal 26 eine Öffnung 30, durch welche hindurch der Materialstreifen 12 aus dem Führungskanal 26 austreten und eine Vorratsschlaufe 32 bilden kann. Mittels einer Lichtschranke 34 mit Reflektor 36 lässt sich feststellen, ob die Vorratsschlaufe 32 eine bestimmte Mindestgrösse unterschreitet.

Das Deckstreifenmaterial 12 wird durch ein erstes Transportrollenpaar 38, 40, welches in Förderrichtung hinter der Filzbremse 28 angeordnet ist, von der Vorratsrolle 16 zur Vorratsschlaufe 32 gefördert. Durch ein zweites Transportrollenpaar 42, 44 wird das Deckstreifenmaterial 12 aus der Vorratsschlaufe 32 abgezogen und dem Schneidwerkzeug 14 zugeführt. Jedes der beiden Transportrollenpaare besteht aus einer Vorschubrolle 38 bzw. 42 und einer Andruckrolle 40 bzw. 44, zwischen denen das Deckstreifenmaterial hindurchgeführt ist. Die Vorschubrolle 38 ist in beiden Drehrichtungen antreibbar. Der Vorschub des Deckstreifenmaterials 32 durch die Vorschubrolle 38 in der einen oder der anderen Richtung ist davon abhängig, ob die Andruckrolle 40 das Deckstreifenmaterial 12 gegen die Vorschubrolle 38 drückt.

Die Vorschubrolle 42 ist in derjenigen Richtung antreibbar, in welcher das Deckstreifenmaterial 12 zum Schneidwerkzeug 14 gefördert wird. Um das Deckstreifenmaterial 12 zurückzuziehen, kann entweder die Andruckrolle 44 von der Vorschubrolle 42 abgehoben oder diese in Rückwärtsrichtung angetrieben werden.

Wie aus Fig. 2 ersichtlich, hat die Vorrichtung Halterungen 20 für zwei Vorratsrollen 16, 16'. Die Halterungen 20 für die beiden Vorratsrollen bilden zusammen mit zwei Einlaufabschnitten 46, 46' eine seitlich um den Abstand a der beiden Vorratsrollen verschibliche Wechseleinheit. Während im Beispielsfall nur zwei Vorratsrollen 16, 16' vorgesehen sind und dementsprechend die Wechseleinheit nur zwei Stellungen einnehmen kann (in Fig. 2 ist die zweite Stellung strichpunktiert angedeutet), könnten ohne weiteres auch drei oder mehr Vorratsrollen und eine entsprechende Anzahl Stellungen der Wechseleinheit vorhanden sein. In jeder dieser Stellungen fluchtet jeweils der einer bestimmten Vorratsrolle zugeordnete Einlaufabschnitt 46 bzw. 46' mit dem anschliessenden Teil des Führungskanals 26 und bildet zusammen mit diesem den gesamten Führungskanal zwischen der Vorratsrolle und dem Schneidwerk 14. Beim Umschalten verfährt die Wechseleinheit um das Mass a seitlich, so dass der andere Einlaufabschnitt, z.B. 46', Anschluss an den übrigen Teil des Führungskanals 26 bekommt. Der Stellantrieb zur seitlichen Verstellung der Wechseleinheit in beiden Richtungen ist in Fig. 2 mit 48 bezeichnet. Es kann sich dabei z.B. um einen hydraulischen oder elektromechanischen Stellantrieb handeln.

Zu jedem Einlaufabschnitt 46 bzw. 46' gehört ein Transportrollenpaar mit einer Vorschubrolle 38 bzw. 38'. Sämtliche Vorschubrollen der verschiedenen Einlaufabschnitte können einen gemeinsamen Antrieb 50 haben. Die Drehung der Vorschubrollen 38, 38' allein bewirkt noch nicht den Transport des Deckstreifenmaterials 12. Dieses wird von der Vorschubrolle erst mitgenommen, wenn die zugehörige Andruckrolle 40 (die beiden den Vorschubrollen 38 und 38' zugeordneten Andruckrollen sind in Fig. 2 nicht gezeigt) angedrückt wird. Bei dem gezeigten Ausführungsbeispiel ist die Konstruktion so gewählt, dass die Andruckrolle 40 sowie die anderen, nicht gezeigten Andruckrollen der Wechseleinheit jeweils einzeln an einem Schwenkarm 52 gelagert sind, der mit seinem freien Ende jeweils dann, wenn der betreffende Einlaufabschnitt 46 bzw. 46' in Flucht mit dem übrigen Teil des Führungskanals 26 kommt, auf einen Nocken 54 aufläuft, der den Schwenkarm 52 nach oben und dadurch die Andruckrolle, z.B. 40, gegen die zugehörige Vorschubrolle, z.B. 38, drückt. Dadurch wird erreicht, dass trotz gleichzeitigen Antriebs aller auf derselben Welle des Antriebs 50 sitzenden Vorschubrollen 38, 38' nur diejenige Vorschubrolle Deckstreifenmaterial 12 in der einen oder anderen Richtung fördert, welche sich in Anschlussstellung an dem Hauptteil des Führungskanals 26 befindet.

Jeder Einlaufabschnitt 46 bzw. 46' hat an seinem vorderen Ende eine Filzbremse wie die in Fig. 1 gezeigte Filzbremse 28 und an seinem hinteren Ende ein von Hand oder maschinell betätigbares Messer 56 bzw. 56'. Diese an jedem Einlaufabschnitt 46, 46' angeordneten Messer 56, 56' gehören mit zur seitlich verfahrbaren Wechseleinheit, die in Fig. 1 und 2 insgesamt mit A bezeichnet ist. Ebenso gehören dazu an jedem Einlaufabschnitt 46, 46' angeordnete Sensoren 58 bzw. 58', z.B. Lichtschranken, mit deren Hilfe das Vorhandensein von Deckstreifenmaterial im betreffenden Einlaufabschnitt an derjenigen Stelle, an welcher sich der Sensor 58 bzw. 58' befindet, festgestellt wird.

Hinter der seitlich verfahrbaren Wechseleinheit A ist in Fig. 1 eine Vorratsschlaufeneinheit B gezeigt, welche als Besonderheit eine in der geöffneten Stellung strichpunktiert gezeichnete Klappe 60 aufweist, mit der die Öffnung 30 am Führungskanal 26 geschlossen werden kann. Anstelle einer Klappe 60 könnte z.B. auch eine Schiebeplatte oder ein anderes Verschlussorgan für die Öffnung 30 vorgesehen sein.

Die sich an die Einheit B anschliessende Einheit C gemäss Fig. 1 enthält im wesentlichen ein übliches Deckstreifengetriebe, wie es z.B. in der oben genannten DE-OS 2 947 371 beschrieben ist. Als Besonderheit ist jedoch zu erwähnen, dass die Vorschuborgane 42, 44 das Fördern des Deckstreifenmaterials 12 in Rückwärtsrichtung zulassen müssen, indem z.B. die Andruckrolle 44 von der Vorschubrolle 42 abgehoben ist oder die letztere in Rückwärtsrichtung angetrieben wird. Ausserdem ist ein weiterer Sensor 62, z.B. ebenfalls in Form einer Lichtschranke, hinter den Transportrollen 42, 44 angeordnet, welcher das Vorhandensein von Deckstreifenmaterial an der Stelle seiner Anbringung am Führungskanal 26 anzeigt.

Auf die letzte in Fig. 1 gezeigte und mit D bezeichnete Einheit braucht im Rahmen der Erfindung nicht näher eingegangen zu werden, da es sich um ein bekanntes Deckstreifen- und Einziehwerkzeug handelt, an dem im Hinblick auf die Erfindung keine Änderungen vorgenommen zu werden brauchen.

Mit der in Fig. 1 und 2 gezeigten Vorrichtung wird das erfindungsgemässe Verfahren wie folgt ausgeführt:

Gemäss Fig. 2 befindet sich der Einlaufabschnitt 46 in Flucht mit dem übrigen Teil des Führungskanals 26. Die Vorschubrolle 38 wird durch den Antrieb 50 intermittierend jeweils dann angetrieben, wenn die Lichtschranke 34 anzeigt, dass das Mindestmass der Vorratsschlaufe 32 unterschritten wird. Dann zieht das Transportrollenpaar 38, 40 weiteres Deckstreifenmaterial 12 von der Vorratsrolle 16 ab und vergrössert die Vorratsschlaufe 12. Unabhängig vom Antrieb der Vorschubrolle 38 zieht das Transportrollenpaar 42, 44 intermittierend mit einem auf den Arbeitstakt des Einziehwerkzeugs 10 abgestimmten Takt Deckstreifenmaterial 12 aus der Vorratsschlaufe 32 und schiebt es am Schneidwerkzeug 14 vorbei in das Deckstreifenwerkzeug. Das Schneidwerkzeug 14 trennt in bekannter Weise die Deckstreifen in der vorbestimmten Länge vom Deckstreifenmaterial 12 ab. Die abgetrennten Deckstreifen werden im Deckstreifenmagazin bzw. Einziehwerkzeug weiter bewegt, so dass von den Transportrollen 42, 44 weiteres Deckstreifenmaterial am Schneidwerkzeug 14 vorbei vorgeschoben, ein weiterer Deckstreifen abgetrennt werden kann, und so fort. Dieser bisher beschriebene Arbeitsvorgang ist für sich bekannt.

Die Besonderheit der Erfindung besteht darin, dass während des allmählichen Verbrauchs der Vorratsrolle 16 eine neue Vorratsrolle 16' in der in Fig. 2 in ausgezogenen Linien gezeigten Lage auf die Wechseleinheit A aufgesetzt wird. Dazu braucht die Maschine nicht angehalten zu werden. Der Anfang des Deckstreifenmaterials der Vorratsrolle 16' wird von Hand in den Einlaufabschnitt 46' eingefädelt, und zwar so weit, dass das äusserste Ende mit dem Messer 56' sauber abgeschnitten werden kann. In dieser Lage bleibt das Deckstreifenmaterial der Vorratsrolle 16' bis die Vorratsrolle 16 verbraucht ist. Dann zeigt der Sensor 22, 24 das Ende der Vorratsrolle 16 an und schaltet die Einziehvorrichtung und das Deckstreifenwerkzeug aus. Die Vorschubrolle 38 wird nunmehr in Rückwärtsrichtung angetrieben, während die Andruckrolle 44 von der Vorschubrolle 42 abgehoben oder auch diese in Rückwärtsrichtung angetrieben wird. Dadurch wird das im Führungskanal 26 liegende und die Vorratsschlaufe 32 bildende Ende des Deckstreifenmaterials 12 der Vorratsrolle 16 aus dem sich an den Einlaufabschnitt 46 anschliessenden Teil des Führungskanals 26 zurückgezogen, wobei ggf. mittels eines Elektromagnets die Filzbremse 28 zu lösen ist.

Sobald der Sensor 58 anzeigt, dass das Ende des Deckstreifenmaterials 12 der verbrauchten Vorratsrolle 16 genügend weit zurückgezogen worden ist, verfährt die Wechseleinheit A seitlich um das Mass a, so dass die Vorratsrolle 16 in die in Fig. 2 gestrichelte Stellung gelangt und die neue Vorratsrolle 16' zusammen mit dem zugeordneten Einlaufabschnitt 46' in Flucht mit dem Hauptteil des Führungskanals 26 kommt. Bei dieser seitlichen Verfahrbewegung läuft der Schwenkarm 52 der Andruckrolle 40 vom Nocken 54 ab, und der der Vorschubrolle 38' zugeordnete Schwenkarm läuft auf den Nocken 54 auf, so dass nunmehr das Deckstreifenmaterial der neuen Vorratsrolle 16' fest gegen die Vorschubrolle 38' angedrückt und bei deren Drehbewegung mitgenommen wird.

Anschliessend schiebt die Vorschubrolle 38' das Deckstreifenmaterial durch den Führungskanal 26 zum Schneidwerkzeug 14 hin. Dabei sollte zunächst die Klappe 60 geschlossen sein. Ausserdem sollte die Andruckrolle 44 von der Vorschubrolle 42 abgehoben sein oder die letztere in Vorschubrichtung umlaufen. Sobald der Sensor 62 anzeigt, dass das Deckstreifenmaterial 12 bis dorthin vorschoben worden ist, halten die Transportrollen 42, 44 das vorderste Ende des Deckstreifenmaterials 12 vorübergehend fest, und es wird die Klappe 60 geöffnet. Nunmehr erzeugt die Vorschubrolle 38' eine neue Vorratsschlaufe 32. Die Vorrichtung ist startbereit, sobald die Lichtschranke 34 das Vorhandensein einer ausreichend grossen Vorratsschlaufe 32 anzeigt. Der Abstand des Sensors 62 vom Schneidwerkzeug 14 wird von der Steuervorrichtung des Antriebs der Vorschubrolle 42 bei der Erzeugung des ersten Deckstreifens nach einem Wechsel der Vorratsrollen berücksichtigt.

Auf die Klappe 60 kann verzichtet werden, falls durch die Führung des Deckstreifenmaterials im Bereich der Öffnung 30 dafür gesorgt wird, dass das vorderste Ende eines neuen Materialstreifens mit Sicherheit im Führungskanal 26 bleibt und sich die Vorratsschlaufe 32 erst dann ausbildet, wenn die Transportrollen 42, 44 das Material erfasst haben.

Wenn das nach Verbrauch einer Vorratsrolle 16 im Führungskanal 26 liegende Ende an den Anfang der nächstfolgenden Vorratsrolle 16' angeschweisst werden soll, wird in der Ansicht nach Fig. 1 zwischen den beiden Einheiten A und B der gezeigten Vorrichtung die in Fig. 3 gezeigte Einheit zwischengeschaltet. Diese enthält eine Ultraschall-Schweisseinrichtung 64 und dicht davor eine steuerbare Schneideinrichtung 66, deren Schneidmesser z.B. mittels Kraftzylinder betätigt wird. Das mit dieser Vorrichtung ausgeführte Verfahren entspricht im ersten Teil dem vorstehend beschriebenen Verfahren. Die Steuereinrichtung der Vorrichtung hat jedoch, wenn die Vorratsrolle 16 zu Ende geht, die Funktion der Lichtschranke 34 auszuschalten und somit dafür zu sorgen, dass die Vorratschlaufe 32 aufgebraucht wird. Dies ist ohne weiteres möglich, weil die verbrauchte Vorratsrolle 16 keine störende träge Masse mehr enthält. Nachdem die Vorratsschlaufe 32 aufgebraucht worden ist, hält die Vorrichtung an und die Schneideinrichtung 66 schneidet das im Führungskanal 26 liegende Ende des Deckstreifenmaterials von der Vorratsrolle 16 ab. Anschliessend zieht die Vorschubrolle 42 die Schnittkante von der Schneideinrichtung 66 zur Schweisseinrichtung 64. Die Wechseleinheit A verfährt seitlich, bis die neue Vorratsrolle 16' über den Einlaufabschnitt 46' Anschluss an den übrigen Teil des Führungskanals 26 hat. Dann schiebt die Vorschubrolle 38' den Anfang der neuen Vorratsrolle 16' bis zur Schweisseinrichtung 64 vor, so dass das im Führungskanal 26 liegende Ende der vorhergehenden Vorratsrolle 16 mit kurzer Überlappung mit dem Anfang der neuen Vorratsrolle 16' zusamengeschweisst werden kann. Anschliessend läuft die Erzeugung weiterer Deckstreifen wieder an, wobei die Steuereinrichtung der Vorschubrolle 42 bei der Erzeugung des ersten Deckstreifens nach dem Wechsel die wegen des Schweissvorgangs vorgenommene Verschiebung des vordersten Endes des Deckstreifenmaterials mit Bezug auf das Schneidwerkzeug 14 berücksichtigt.

Die Schweissstelle bildet eine Verdickung des Deckstreifenmaterials. Deshalb ist es normalerweise erwünscht, dass die beim Abtrennen der einzelnen Deckstreifen an das äusserste Ende eines Deckstreifens gelangt. Auf diese Weise stört sie weder im Deckstreifen-Biegewerkzeug, welches in Fig. 4 in grösserem Massstab dargestellt ist, noch im Stator.

Zur Veranschaulichung der Verhältnisse zeigt Fig. 4 in einem Ausschnitt das Schneidwerkzeug 14 und das Deckstreifen-Biegewerkzeug. Im einzelnen sind in Fig. 4 der Biegestempel und die mit diesem zusammenwirkende Biegeleiste des Deckstreifen-Biegewerkzeugs mit 68 und 70 bezeichnet. Das Schneidwerkzeug 14 besteht aus einem schmalen feststehenden Messerteil 72 und einem beweglichen Messerteil 74. Wie in Fig. 4 gezeigt, sollte beim Wechsel der Vorratsrollen 16, 16' die in Fig. 4 mit 76 gekennzeichnete Schweissstelle so gelegt werden, dass sie beim Schneidvorgang am Schneidwerkzeug 14 unmittelbar am feststehenden Messer 72 anliegt. In dieser Lage kommt die Schweissstelle 76 noch nicht zwischen Biegestempel 68 und Biegeleiste 70 und befindet sich direkt am Ende eines Deckstreifens.

Da die Länge des Führungskanals 26 bekannt ist, bereitet es für die Vorschubsteuerung des Materialstreifens vor dem Schweissvorgang keine Schwierigkeit, das im Führungskanal 26 liegende Ende vor dem Abschneiden durch die Schneideinrichtung 66 so weit zurückzuziehen, dass beim Wiederanlaufen der Vorrichtung nach dem Schweissen die Schweissstelle in die in Fig. 4 gezeigte Lage kommt.

Die vorstehend nur als Transportrollen 42, 44 bezeichneten Rollen könnten z. B. auch zum Vorprägen der Deckstreifen benutzt werden. Auch ein Ersatz durch andersartige Vorschuborgane, z. B. den Materialstreifen klemmende und schrittweise vorschiebende Klinken, ist möglich. An der Wechseleinheit A brauchten auch nicht unbedingt an jedem Einlaufabschnitt 46, 46' Transportrollen vorgesehen zu sein, und insbesondere brauchten nicht alle parallel angeordneten Vorschubrollen 38, 38' gleichzeitig umlaufen. Für die Erfindung kommt es lediglich darauf an, dass sich der Anfang einer neuen Vorratsrolle 16, 16' ohne Unterbrechung des Arbeitsablaufs in einen Einlaufabschnitt 46, 46' vorweg einfädeln und ggf. in definierter Lage halten lässt, so dass dann beim Wechsel der Vorratsrollen 16, 16' der Materialanfang der neuen Vorratsrolle sehr schnell und ohne Eingriff der Bedienungsperson in die richtige Lage mit Bezug auf den Hauptteil des Führungskanals 26 gebracht und von den Vorschuborganen erfasst werden kann. Es mag daher im Einzelfall genügen, wenn sich nur in Flucht mit dem Hauptteil des Führungskanals 26 Transportrollen 38, 40 befinden, welche sich trennen lassen, um die verschiedenen Einlaufabschnitte 46, 46', welche in diesem Fall im Bereich der Transportrollen 38, 40 eine Unterbrechung haben, in die mit dem Hauptteil des Führungskanals 26 fluchtende Lage zu bringen.

Selbstverständlich ist die Erfindung auch nicht auf eine geradlinige seitliche Verfahrbewegung der Wechseleinheit A beschränkt, um die verschiedenen Einlaufabschnitte 46, 46' mit dem Haupteil des Führungskanals 26 einzeln nacheinander zum Anschluss zu bringen. Diese Relativbewegung könnte z. B. auch in senkrechter Richtung oder durch eine Drehbewegung der Wechseleinheit A um ein Schwenkzentrum erfolgen, sofern nicht die Wechseleinheit A feststeht und der wechselweise Anschluss durch Bewegung wenigstens eines Teils des übrigen Führungskanals 26 erfolgt.

## Patentansprüche

1. Verfahren zur Erzeugung von in die Nuten von Statoren elektrischer Maschinen einsetzbaren Deckstreifen aus in Vorratsrollen bereitgestelltem streifenförmigen Ausgangsmaterial, welches durch an einem Führungskanal angeordnete Vorschuborgane einem Schneidwerkzeug zugeführt wird, dadurch gekennzeichnet, dass die Materialstreifen mehrerer Vorratsrollen jeweils in einen von mehreren Einlaufabschnitten des Führungskanals eingeführt werden und beim Übergang von einer zur nächsten Vorratsrolle deren Materialstreifen durch gesteuerte Bewegung des diesen haltenden Einlaufabschnitts relativ zum anschliessenden Teil des Führungskanals positioniert wird.

2. Verfahren nach Anspruch 1, dadurch gekennzeichnet, dass vor der Ausrichtung des in einem Einlaufabschnitt gehaltenen Anfangs eines Materialstreifens in Flucht mit dem anschliessenden Abschnitt des Führungskanals das darin liegende Ende der vorhergehenden Vorratsrolle rückwärts herausgezogen wird.

3. Verfahren nach Anspruch 1, dadurch gekennzeichnet, dass vor der Ausrichtung des in einem Einlaufabschnitt gehaltenen Anfangs eines Materialstreifens in Flucht mit dem anschliessenden Abschnitt des Führungskanals das darin liegende Ende der vorhergehenden Vorratsrolle abgeschnitten und mit dem Anfang der nächsten Vorratsrolle zusammengeschweisst wird.

4. Verfahren nach Anspruch 3, dadurch gekennzeichnet, dass das Ende der vorhergehenden Vorratsspule um eine solche Länge teilweise rückwärts aus dem Führungskanal herausgezogen und dann abgeschnitten und mit dem Anfang der nächsten Vorratsrolle zusammengeschweisst wird, dass beim anschliessenden Abtrennen der Deckstreifen die Schweissstelle an ein Ende eines Deckstreifens gelangt.

5. Vorrichtung zur Durchführung des Verfahrens nach einem der Ansprüche 1 bis 4 mit einem Führungskanal zwischen einer Vorratsrolle Deckstreifenmaterial (16) und einem die Deckstreifen davon abtrennenden Schneidwerkzeug (14), dadurch gekennzeichnet, dass der Führungskanal (26) meherere Einlaufabschnitte (46, 46') hat, welche durch Realativbewegung einzeln vor seinen anschliessenden Teil positionierbar sind und wegistens an dem jeweils in dieser Anschlussstellung positionierten Einlaufabschnitt reversierbare Vorschuborgane (38, 40) angeordnet sind.

6. Vorrichtung nach Anspruch 5, dadurch gekennzeichnet, dass die Einlaufabschnitte (46, 46') durch gemeinsame Parallelverschiebung einzeln an den übrigen Teil des Führungskanals (26) anschliessbar sind.

7. Vorrichtung nach Anspruch 6, dadurch gekennzeichnet, das Halterungen (20) zur drehbaren Aufnahme der Vorratsrollen (16, 16') gemeinsam mit den Einlaufabschnitten (46, 46') verfahrbar sind.

8. Vorrichtung nach Anspruch 5, dadurch gekennzeichnet, dass an jedem Einlaufabschnitt (46, 46') Transportrollen (38, 40; 38') angebracht sind, die in der Anschlussstellung in beiden Drehrichtungen antreibbar sind.

9. Vorrichtung nach Anspruch 5, dadurch gekennzeichnet, dass an jedem Einlaufabschnitt (46, 46') neben seinem in Vorschubrichtung hinteren Ende ein Messer (56, 56') angeordnet ist.

10. Vorrichtung nach Anspruch 5, dadurch gekennzeichnet, dass an dem an die Einlaufabschnitte (46, 46') anschliessbaren Teil des Führungskanals (26) eine durch eine steuerbare Klappe (60), Schiebeplatte oder dergleichen verschliessbare seitliche Öffnung (30) zur Ausbildung einer Vorratsschlaufe (32) angeordnet ist und kurz vor dem Schneidwerkzeug (14) weitere Vorschuborgane (42, 44) angeordenet sind, welche reversierbar oder in eine das Deckstreifenmaterial (12) freigebende Neutralstellung bewegbar sind.

11. Vorrichtung nach Anspruch 5, dadurch gekennzeichnet, dass an dem anschliessenden Teil des Führungskanals (26) eine Deckstreifenmaterial-Schweisseinrichtung (64) angeordnet ist.

## Revendications

1. Procédé pour produire des bandes de couverture à insérer dans les encoches de stators de machines électriques, à partir d'un matériau initial sous forme de bandes d'approvisionnement enroulées sur des rouleaux d'alimentation, ces bandes de matériau alimentant un organe d'avance disposé sur un canal de guidage, caractérisé en ce que les bandes de matériau de plusieurs rouleaux d'alimentation sont dirigées chacune vers l'un des multiples tronçons d'entrée du canal de guidage et positionnées au cours du passage entre l'un des rouleaux d'alimentation et le rouleau suivant, par un mouvement commandé du tronçon contenant cette bande, par rapport à la partie suivante duduit canal de guidage.

2. Procédé selon la Revendication 1, caractérisé en ce que, avant d'effectuer l'orientation de l'extrémité de tête, maintenue dans un tronçon d'entrée, d'une bande de matériau alignée avec le tronçon adjacent du canal de guidage, l'on tire en arrière l'extrémité, qui se trouve dans ce canal, du rouleau d'alimentation précédent.

3. Procédé selon la Revendication 1, caractérisé en ce que, avant d'effectuer l'orientation de l'extrémité de tête, maintenue dans un tronçon d'entrée, d'une bande de matériau en alignement avec le tronçon adjacent du canal de guidage, l'on coupe l'extrémité, qui se trouve dans ce canal, du rouleau d'alimentation précédent, et on soude cette même extrémité à l'extrémité de tête du rouleau d'alimentation suivant.

4. Procédé selon la Revendication 3, caractérisé en ce que l'extrémité du rouleau d'alimentation précédent est tirée partiellement en arrière sur une certaine longueur, par rapport au canal de guidage, puis sectionné et soudée à l'extrémité de tête du rouleau d'alimentation suivant, de telle sorte qu'au cours de la séparation de la bande de couverture l'emplacement de la soudure se trouve à une extrémité d'une bande de couverture.

5. Dispositif pour la mise en œuvre du procédé suivant les Revendications 1 à 4, comportant un canal de guidage entre un rouleau d'alimentation en matériau pour bandes de couverture (16) et un outil de coupe (14) destiné à détacher les bandes de couverture dudit rouleau, caractérisé en ce que le canal de guidage (26) comprend plusieurs tronçons d'entrée (46, 46') lesquels, grâce à un mouvement relatif, peuvent être positionnés séparément par rapport au tronçon adjacent, et qu'il est prévu, au moins sur chaque tronçon d'entrée positionnée dans cette position de raccordement, des organes d'avance réversibles (38, 40).

6. Dispositif selon la Revendication 5, caractérisé en ce que les tronçons d'entrée (46, 46') peuvent être reliés individuellement, par un mouvement de glissement parallèle, à la partie restance du canal de guidage (26).

7. Dispositif selon la Revendication 6, caractérisé en ce que des fixations (20) peuvent être déplacées en commun avec les tronçons d'entrée (46, 46′) pour assurer la réception en rotation des rouleaux d'alimentation (16, 16′).

8. Dispositif selon la Revendication 5, caractérisé en ce que des galets de transfert (38, 40; 38′) sont prévus sur chaque tronçon d'entrée (46, 46′) et peuvent être entraînés dans les deux sens de rotation dans la position de raccordement.

9. Dispositif selon la Revendication 5, caractérisé en ce que, à chaque tronçon d'entrée (46, 46′), il est prévu un couteau (56, 56′) placé à proximité de son extrémité arrière par rapport au sens de l'avance.

10. Dispositif selon la Revendication 5, caractérisé en ce que, à la partie du canal de guidage (26) qui peut être raccordée au tronçon d'entrée (46, 46′), il est prévu une ouverture latérale (30) pouvant être fermée par un volet pivotant (60), un rideau ou autre moyen coulissant similaire, destinée à former une boucle d'alimentation (32) et qu'il est prévu, tout près du couteau (14) et en amont de celui-ci, d'autres organes d'avance (42, 44) mobiles soit de façon réversible, soit dans une position neutre de libération du matériau de la bande de couverture (12).

11. Dispositif selon la Revendication 5, caractérisée en ce que la partie de raccordement du canal de guidage (26) comporte un dispositif de soudage (64) du matériau de la bande de couverture.

## Claims

1. Method for producing cover strips insertable in the slots of stators of electrical machines, from stripform starting material which is made ready in supply rolls and which is fed to a cutting tool by means of feed elements arranged at a guide duct, characterised in that the material strips of a plurality of supply rolls are in each case introduced into one of a plurality of entry portions of the guide duct, and, when there is a changeover from one supply roll to the next, the material strip thereof is positioned by controlled movement of the entry portion holding said strip relatively to the adjacent part of the guide duct.

2. Method according to claim 1, characterised in that before the alignment of the start of a material strip held in an entry portion in line with the adjacent portion of the guide duct, that end of the preceding supply roll which is situated therein is withdrawn rearwards.

3. Method according to claim 1, characterised in that before the alignment of the start of a material strip held in an entry portion in line with the adjacent portion of the guide duct, that end of the preceding supply roll which is situated therein is cut off, and welded to be started of the next supply roll.

4. Method according to claim 3, characterised in that the end of the prceding supply spool is withdrawn for such a length partially rearwardly out of the guide duct and then cut off and welded to the start of the next supply roll, that when the cover strips are subsequently separated the weld zone comes to be situated at one end of a cover strip.

5. Device for carrying out the method according to one of the claims 1 to 4, with a guide duct between a supply roll of cover strip material (16) and a cutting tool (14) separating the cover strips therefrom, characterised in that the guide duct (26) has a plurality of entry portions (46, 46′) which are positionable by relative movement individually before its adjoining part, and reversible feed elements (38, 40) are arranged at least at that entry portion which is positioned in this adjoining situated at the time.

6. Device according to claim 5, characterised in that the entry portions (46, 46′) are adapted to be made to adjoin individually the remaining part of the guide duct (26) by joint parallel displacement.

7. Device according to claim 6, characterised in that holding means (20), for rotatably accommodating the supply rolls (16, 16′) are adapted to travel jointly with the entry portions (46, 46′).

8. Device according to claim 5, characterised in that at each entry portion (46, 46′) conveying rollers (38, 40; 38′) are arranged which are adapted to be driven in both directions of rotation in the adjointed position.

9. Device according to claim 5, characterised in that at each entry portion (46, 46′), near its rear end considered in the feed direction, there is arranged a cutter (56, 56′).

10. Device according to claim 5, characterised in that at the part of the guide duct (26) which is adapted to be made to adjoin the entry portions (46, 46′) there is arranged a lateral opening (30) for the forming of a reserve loop (32), said opening being closable by a controllable flap (60), sliding plate or the like, and a short distance before the cutting tool (14) there are arranged further feed elements (42, 44) which are reversible or movable into a neutral position which frees the cover strip material (12).

11. Device according to claim 5, characterised in that there is arranged at the adjoining part of the guide duct (26) a cover strip material welding apparatus (64).

Fig. 1

EP 0 163 928 B1

Fig. 2

Fig. 3

Fig. 4

11